# EUROPÄISCHE PATENTSCHRIFT

(11) **EP 3 395 141 B1**
(45) Veröffentlichungstag und Bekanntmachung des Hinweises auf die Patenterteilung: **23.09.2020**
(21) Anmeldenummer: 18168923.3
(22) Anmeldetag: 24.04.2018
(51) Int. Cl.: A01B 69/04, A01B 69/00

(54) **LANDWIRTSCHAFTLICHES ANBAUGERÄT**
AGRICULTURAL IMPLEMENT
APPAREIL AGRICOLE PORTÉ

(30) Priorität: 25.04.2017 DE 202017002177 U
(43) Veröffentlichungstag der Anmeldung: 31.10.2018
(73) Patentinhaber: PÖTTINGER Landtechnik GmbH, 4710 Grieskirchen (AT)
(72) Erfinder: Reininger, Markus, 4752 Riedau (AT)
(74) Vertreter: Thoma, Michael

(56) Entgegenhaltungen:
- EP-A1- 2 022 306
- US-A- 4 982 976
- US-A1- 2004 124 605
- US-A1- 2014 277 675
- US-A1- 2016 057 921

## Beschreibung

Die vorliegende Erfindung betrifft ein landwirtschaftliches Anbaugerät zum Anbau an einen Schlepper, mit einem Maschinenrahmen, der über ein Fahrwerk am Boden abgestützt ist, wobei das Fahrwerk zumindest eine Achse mit freigängig einlenkbaren Nachlaufrädern aufweist, wobei eine Sperrvorrichtung zum Sperren des Freigangs der Einlenkbarkeit der Nachlaufräder vorgesehen ist.

Ein landwirtschaftliches Anbaugerät nach dem Oberbegriff des Anspruchs 1 ist aus der Schrift EP 20 22 306 A1 bekannt, wobei am Anbaugerät ein Neigungssensor vorgesehen ist, um die Quer- und Längsneigung gegenüber der Horizontalen zu messen und neigungsabhängig die Lenkung sperren zu können. Ferner beschreibt die US 2016/0057921 A1 ein automatisiertes Lenksystem für ein landwirtschaftliches Gespann, wobei in Abhängigkeit einer erfassten Hangneigung ein Gegensteuern vorgesehen wird.

Bei größeren landwirtschaftlichen Anbaugeräten wie Ladewagen, Häckselwagen oder auch Ballenpressen ist es bekannt, Radachsen mit einlenkbaren Rädern zu verwenden, wobei einerseits aktiv eingelenkte, meist hydraulisch zwangsgelenkte Radachsen oder andererseits frei einlenkbare, sich sozusagen selbstlenkende Nachlaufräder verwendet werden können. Während aktiv einlenkbare, zwangsgelenkte Radachsen helfen können, ein zu starkes Kurvenschneiden zu vermeiden bzw. das Anbaugerät in der gewünschten Spur hinter dem Schlepper zu halten, haben Nachlauflenkachsen bei gezogenen Geräten gegenüber hydraulisch zwangsgelenkten Achsen den Vorteil, dass Nachlauflenkachsen bei hohen Fahrgeschwindigkeiten bzw. unebenem Untergrund einfach gesperrt werden können und somit ein verbessertes Nachlaufverhalten erzielt werden kann. Zusätzlich wirken bei Nachlauflenkachsen keine Kräfte auf Lenkkugeln und es kann ein größerer Lenkwinkel aufgrund von mehr Freiheit im vorderen Bereich des Fahrzeugs erreicht werden.

Ein Vorteil beider Systeme gleichermaßen, d.h. sowohl bei zwangsgelenkten als auch nachlaufgelenkten Radachsen, ist es, dass ein Radieren der Räder bei Kurvenfahrten und damit eine Beschädigung der Grasnarbe bzw. des Bodens auch bei engeren Kurvenfahrten besser vermieden werden kann. Dies kommt insbesondere bei zwei- oder mehrachsigen Anbaugeräten zum Tragen, bei denen bisweilen eine Achse starr, nicht-einlenkbar und eine weitere Achse einlenkbar ausgebildet ist. Solche mehrachsigen Fahrwerke werden insbesondere an größeren landwirtschaftlichen Anbaugeräten gerne verwendet, um im Feldbetrieb eine unerwünschte Bodenverdichtung vermeiden und im Straßentransport zulässige Achslasten einhalten zu können.

Auch wenn bei mehrachsigen Fahrwerken eine starre Achse vorhanden ist, ist es sinnvoll, die im normalen Feldbetrieb üblicherweise freigängig einlenkbare Nachlaufachse bei hohen Fahrgeschwindigkeiten bzw. unebenem Untergrund zu sperren, um das Nachlaufverhalten zu verbessern, wobei bei höheren Fahrgeschwindigkeiten der genannte Nachteil des Radierens der Räder über den Boden bei engeren Kurvenfahrten weniger ins Gewicht fällt, da bei hohen Fahrgeschwindigkeiten üblicherweise keine engen Kurven gefahren werden. Auch bei Rückwärtsfahrten ist es sinnvoll bzw. sogar notwendig, die Nachlaufachsen zu sperren, da anderenfalls die Räder unkontrolliert einschlagen würden.

Da das Sperren und Entsperren der Einlenkbarkeit solcher Nachlaufräder je nach Betriebssituation öfters zu bewerkstelligen ist und bisweilen vom Maschinenführer vergessen wird, wurde bereits angedacht, die Sperrfunktion automatisch zu steuern. Hierzu kann auf ein Fahrgeschwindigkeitssignal eines Geschwindigkeitssensors zurückgegriffen werden, um bei höheren Fahrgeschwindigkeiten die Einlenkbarkeit zu sperren und bei niedrigeren Fahrgeschwindigkeiten wieder zu entsperren bzw. bei Rückwärtsfahrten die Einlenkbarkeit generell zu sperren.

Eine solche automatische Sperrung der Einlenkbarkeit in Abhängigkeit der Fahrgeschwindigkeit und Fahrtrichtung kann jedoch das Fahrverhalten nicht in allen Betriebssituationen in der gewünschten Weise verbessern, da es auch in langsamen Fahrbetriebssituationen wünschenswert sein kann, die Einlenkbarkeit der Nachlaufachse zu sperren. Insbesondere im Arbeitsbetrieb auf dem landwirtschaftlichen Feld ist es nicht ausreichend, die Einlenkbarkeit der Nachlaufräder bei hohen Geschwindigkeiten und Rückwärtsfahrten zu sperren.

Hiervon ausgehend liegt der Erfindung die Aufgabe zugrunde, ein verbessertes landwirtschaftliches Anbaugerät der genannten Art zu schaffen, das Nachteile des Standes der Technik vermeidet und Letzteren in vorteilhafter Weise weiterbildet. Insbesondere soll das Fahrverhalten von landwirtschaftlichen Anbaugeräten mit frei einlenkbaren Nachlauflenkachsen weiter verbessert werden, auch wenn die Betriebsbedingungen in rascher Folge variieren.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, für die Freigängigkeit der Nachlauflenkachse die Hangneigung zu berücksichtigen und je nach Neigung die Einlenkbarkeit zu sperren oder zu entsperren. Erfindungsgemäß wird vorgeschlagen, eine Bestimmungseinrichtung zum Bestimmen einer Neigung des Anbaugeräts und/oder einer Neigung der zu befahrenden Fahrgasse, sowie einer Steuervorrichtung zum automatischen Bereitstellen eines Sperrsignals zum Sperren der Sperrvorrichtung, wenn die von der Bestimmungseinrichtung bestimmte Neigung einen vorbestimmten Neigungsschwellenwert erreicht oder überschreitet, vorzusehen. Speziell beim Fahren am Hang kann auch bei niedrigen Vorwärtsgeschwindigkeiten das Problem bestehen, dass das Anbaugerät mit freier, geöffneter Nachlaufachse der Gewichtskraft folgt und folglich abdriftet, was zu einer Gefahr für das Gespann und den Fahrer werden kann. Durch die automatische Bestimmung der Neigung des Anbaugeräts bzw. der Neigung der zu befahrenden Fahrgasse und das automatische Bereitstellen eines Sperrsignals, wenn die bestimmte Neigung zu groß wird, kann dieser Gefahr vorgebeugt werden und ein besseres, sichereres Fahrverhalten erzielt werden.

Um die Erhöhung der Fahrsicherheit zu erreichen, kann es bereits ausreichend sein, nur das Sperrsignal automatisch bereitzustellen und es dem Fahrer zu überlassen, die Sperrung wieder zu lösen. Um jedoch auch den Fahrkomfort zu erhöhen und zu vermeiden, dass der Maschinenführer das Entsperren vergisst, kann die Sperrvorrichtung vorteilhafterweise dazu ausgebildet sein, auch ein Entsperrsignal zum Entsperren der Sperrvorrichtung automatisch bereitzustellen, wenn die von der Bestimmungseinrichtung bestimmte Anbaugeräte- bzw. Fahrgassenneigung einen vorbestimmten Neigungsschwellwert unterschreitet. Dieser Neigungsschwellwert, bei dessen Unterschreiten das Entsperrsignal bereitgestellt wird, kann mit dem erstgenannten Schwellwert, bei dessen Überschreiten das Sperrsignal gegeben wird, zusammenfallen bzw. übereinstimmen. Um ein zu rasches Hin- und Herschalten zu vermeiden, kann der zweitgenannte Neigungsschwellwert jedoch auch von dem erstgenannten Neigungsschwellwert abweichen, beispielsweise niedriger angesetzt werden, so dass das Entsperrsignal erst dann gegeben wird, wenn das Neigungssignal der Bestimmungseinrichtung um einen bestimmten Betrag unter den Neigungsschwellwert gefallen ist, bei dessen Überschreiten zuvor das Sperrsignal gegeben wurde.

Das automatisch bereitgestellte Sperrsignal kann grundsätzlich in verschiedener Weise umgesetzt werden. Zunächst ist es denkbar, das genannte Sperrsignal und/oder das vorgenannte Entsperrsignal auf einem Display anzuzeigen oder dem Maschinenführer mit anderen Anzeigemitteln zur Kenntnis zu bringen, woraufhin dann der Maschinenführer die Sperrvorrichtung manuell betätigen kann, beispielsweise durch Betätigen eines entsprechenden Eingabemittels beispielsweise auf einem Touchdisplay oder in Form eines Betätigungsschalters oder -schiebers. Alternativ zu einem solchen halbautomatischen Sperren und/oder Entsperren der Einschlagbarkeit der Nachlaufräder kann die Sperrvorrichtung jedoch auch vollautomatisch angesteuert werden und das von der Steuervorrichtung automatisch bereitgestellte Sperrsignal und/oder Entsperrsignal automatisch in ein Sperren bzw. Entsperren der Einlenkbarkeit der Nachlaufachse bzw. deren Räder umgesetzt werden. Die genannte Sperrvorrichtung kann hierzu einen Signaleingang umfassen, über den das von der Steuervorrichtung bereitgestellte Steuersignal an die Sperrvorrichtung gegeben und von dieser umgesetzt werden kann.

Die für das Sperren bzw. Entsperren berücksichtigte Anbaugeräte- bzw. Fahrgassenneigung kann dabei insbesondere eine Querneigung quer zur Fahrtrichtung und/oder quer zur Längsachse des Anbaugeräts sein bzw. umfassen. Insbesondere Querfahrten entlang eines Hangs können zu instabilen Fahrsituationen führen, wenn die Nachlauflenkachse freigängig einlenkbar ist, so dass die Bestimmungseinrichtung insbesondere dazu ausgebildet sein kann, die Querneigung quer zur Fahrgasse und/oder quer zur Anbaugerätelängsachse zu bestimmen. Überschreitet diese Querneigung einen vorbestimmten Querneigungsschwellenwert, kann das Sperrsignal bereitgestellt und umgekehrt bei Unterschreiten eines solchen Querneigungsschwellenwerts das Entsperrsignal bereitgestellt werden.

Grundsätzlich kann es aber auch in Betracht kommen, die Neigung in Fahrtrichtung zu berücksichtigen, da es insbesondere auch bei stark abschüssigen Fahrgassen, in denen das normalerweise gezogene Anbaugerät auf den Schlepper aufläuft, zu instabilen Fahrsituationen kommen kann. In Weiterbildung der Erfindung kann die Bestimmungseinrichtung daher auch dazu ausgebildet sein, eine solche Neigung in Fahrtrichtung zu berücksichtigen, um bei Erreichen oder Überschreiten einer vorbestimmten Abschüssigkeit, also Neigung bergab in Fahrtrichtung, ein Sperrsignal bereitzustellen und wenn die Abschüssigkeit wieder auf ein erträgliches Maß zurückgegangen ist, ein Entsperrsignal bereitzustellen.

Die von der Bestimmungseinrichtung bestimmte Neigung kann dabei einerseits die Neigung des Anbaugeräts selbst sein. Alternativ oder zusätzlich kann die Bestimmungseinrichtung jedoch auch dazu ausgebildet sein, die Neigung sozusagen vorausschauend zu bestimmen, um rechtzeitig reagieren und das Sperrsignal bereitstellen zu können, bevor eine gefährliche Neigung erreicht wird. Insbesondere kann die Bestimmungseinrichtung dazu ausgebildet sein, die Fahrgassenneigung eines vorausliegenden Fahrgassenstücks, das erst noch erreicht wird, zu bestimmen, um das Sperrsignal bereitstellen zu können, wenn die Fahrgassenneigung des vorausliegenden Fahrgassenstücks den vorbestimmten Neigungsschwellwert erreicht oder überschreitet.

Die Bestimmungseinrichtung kann zur Bestimmung der Neigung grundsätzlich verschieden ausgebildet sein. In Weiterbildung der Erfindung kann die Bestimmungseinrichtung einen Neigungssensor umfassen, der die Anbaugeräte- und/oder Fahrgassenneigung sensorisch erfasst, beispielsweise direkt über die erfassbare Auslenkung eines im Lot bleibenden Pendelelements oder dergleichen.

Alternativ oder zusätzlich ist eine Bestimmung der Hangneigung jedoch auch auf indirektem Wege möglich. Beispielsweise kann bei einem Lade- und/oder Häckselgutwagen der Ladedruck im Laderaum auf dessen Seitenwände erfasst und als Maß für die Neigung des Anbaugeräts genommen werden, da bei Neigung des Geräts der Ladedruck auf der hangabwärtigen Seitenwand zunehmen und an der hangaufwärtigen Seitenwand abnehmen wird. Alternativ oder zusätzlich kann auch eine Sensorik zum Bestimmen der Lasten an verschiedenen Abschnitten des Maschinenrahmens und/oder auf verschiedene Räder vorgesehen sein, da beispielsweise die Gewichtskraft auf ein talseitiges Rad oder einen talseitigen Maschinenrahmenteil größer als die Last auf ein bergseitiges Rad bzw. einen bergseitigen Maschinenrahmenteil sein wird, wenn quer zum Hang gefahren wird.

Gemäß der Erfindung ist die Steuervorrichtung dazu ausgebildet, zumindest einen weiteren Betriebs- und/oder Fahrgassenparameter über die Hangneigung hinaus zu berücksichtigen und das Sperrsignal und/oder das Entsperrsignal in Abhängigkeit dieses zumindest einen weiteren Betriebs- und/oder Fahrgassenparameters bereitzustellen. Ein solcher weiterer Betriebs- und/oder Fahrgassenparameter kann beispielsweise die Fahrgeschwindigkeit und/oder eine Bodenbeschaffenheit sein, wobei ein entsprechendes Fahrgeschwindigkeitssignal und/oder ein entsprechendes Bodenbeschaffenheitssignal insbesondere dergestalt berücksichtigt werden kann, dass bei Erreichen und/oder Überschreiten einer vorbestimmten Fahrgeschwindigkeit und/oder bei Rückwärtsfahrten das Sperrsignal bereitgestellt und bei Unterschreiten einer vorbestimmten Fahrgeschwindigkeit das Entsperrsignal bereitgestellt wird, und/oder bei Erreichen oder Überschreiten einer vorbestimmten Bodenglätte oder -feuchte das Sperrsignal generell bereitgestellt wird, und beispielsweise auf nassen oder gar gefrorenen Böden die freigängige Einlenkbarkeit der Nachlaufachse zu sperren. Das Fahrgeschwindigkeitssignal kann an sich in einfacher Weise durch einen Fahrgeschwindigkeitssensor bereitgestellt werden. Das Bodenbeschaffenheitssignal kann ebenfalls durch eine vorbestimmte Sensorik generiert werden, beispielsweise durch einen Bodenfeuchte- und/oder Temperatursensor.

Solche weiteren Betriebs- und/oder Fahrgassenparameter können von der Steuervorrichtung in Weiterbildung der Erfindung aber nicht nur in absoluter Weise für sich selbst berücksichtigt und für das Generieren eines Sperrsignals zugrunde gelegt werden, sondern auch dazu verwendet werden, im Zusammenspiel mit der Hangneigung das Sperren bzw. Entsperren der freigängigen Einlenkbarkeit zu beeinflussen. Erfindungsgemäß wird der zumindest eine weitere Betriebs- und/oder Fahrgassenparameter von der Steuervorrichtung dazu verwendet, den vorbestimmten Neigungsschwellwert, bei dessen Erreichen oder Überschreiten das Sperrsignal bereitgestellt wird, abzusenken oder zu erhöhen.

Beispielsweise kann die Steuervorrichtung vorsehen, bei höheren Fahrgeschwindigkeiten das Sperrsignal schon bei Erreichen oder Überschreiten eines kleineren Neigungsschwellwerts bereitzustellen und bei niedrigeren Fahrgeschwindigkeiten das Sperrsignal erst bei größeren Hangneigungen bereitzustellen. Alternativ oder zusätzlich kann der genannte Neigungsschwellwert bei nassen, feuchten Böden abgesenkt und/oder bei trockenen, griffigen Böden erhöht werden, um bei Fahrgassen auf Böden mit wenig Grip für die Reifen schon bei geringeren Neigungen die Sperrvorrichtung zu aktivieren, während bei trockenen, griffigen Böden die Nachlauflenkachse erst bei stärkeren Hangneigungen gesperrt wird.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht eines landwirtschaftlichen Anbaugeräts in Form eines Ladewagens nach einer vorteilhaften Ausführung der Erfindung, wobei der Ladewagen ein zweiachsiges Fahrwerk aufweist, das eine ungelenkte, starre Achse und eine Nachlauflenkachse umfasst,
- Fig. 2:: eine schematische Draufsicht auf die Achsen des Fahrwerks des Ladewagens aus Fig. 1, von denen eine als Nachlenkachse und die andere als starre, ungelenkte Achse ausgebildet ist.

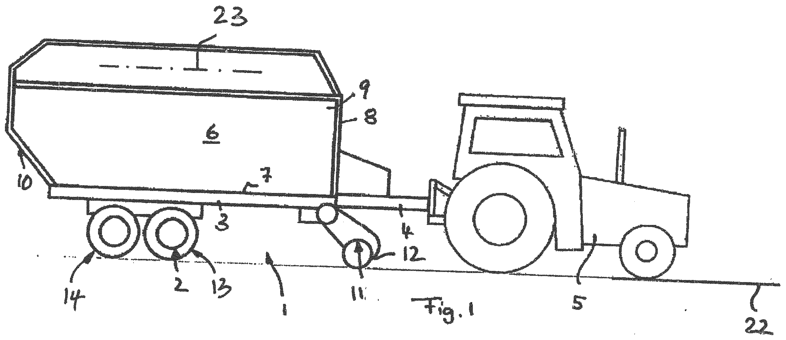

Wie Fig. 1 zeigt, kann der Lade- und/oder Ernteguttransportwagen 1 ein Fahrwerk 2 aufweisen, das einen Maschinenrahmen 3 trägt, der über eine Deichsel 4 an einen Schlepper 5 angebaut werden kann. Je nach Ausbildung des Anbaugeräts kann anstelle einer Deichsel auch eine Anbauvorrichtung beispielsweise in Form eines Anbaubocks mit einer Dreipunktanlenkung vorgesehen sein, wobei die Anbauvorrichtung vorzugsweise ein Einlenken des gezogenen Anbaugeräts um eine aufrechte Achse gegenüber dem Schlepper 5 zulässt.

Der genannte Maschinenrahmen 3 kann einen Ladegutspeicher 6 tragen, der seitlich von zwei seitlichen Bordwänden 9, frontseitig von einer Frontwand 8 und rückseitig von einer Rückwand 10 begrenzt wird.

Der Lade- bzw. Ernteguttransportwagen kann hierbei als Selbstlader ausgebildet sein und eine Ladevorrichtung 11 beispielsweise in Form einer Pickup 12 aufweisen, die beispielsweise mittels einer rotierend antreibbaren Stachelwalze Erntegut vom Boden aufsammeln und in den genannten Ladegutspeicher 6 fördern kann. In dem genannten Ladegutspeicher 6 kann das Ladegut beispielsweise mittels eines Kratzbodens 7 verteilt und insbesondere zur Rückwand 10 hin gefördert und bei geöffneter Rückwand 10 abgeladen werden.

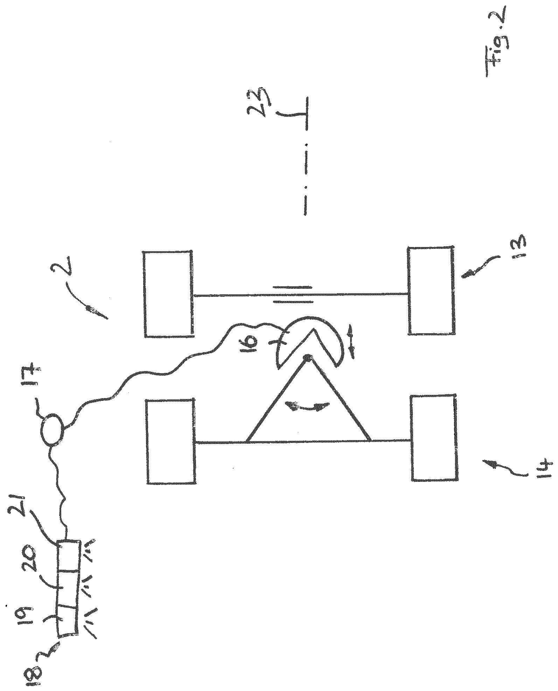

Das Fahrwerk 2 kann vorteilhafterweise mehrachsig ausgebildet sein und beispielsweise zwei Achsen 13 und 14, wie dies Figur 1 und 2 zeigen, oder auch drei oder mehr Achsen umfassen.

Jede der Achsen 13 und 14 umfasst rechts und links am Anbaugerät Räder, die als Einfach- oder Mehrfach-, beispielsweise Zwillingsräder, ausgebildet sein können, wobei die Räder mittels Einzelradaufhängung unabhängig voneinander oder über eine Achse miteinander gekoppelt aufgehängt sein können.

Vorteilhafterweise umfasst das Fahrwerk 2 dabei zumindest eine ungelenkte Achse 13, deren Räder nicht gegenüber dem Maschinenrahmen 3 eingelenkt werden können, sowie zumindest eine einlenkbare Nachlauflenkachse 14, deren Räder 15 freigängig einlenkbar und nachlaufend aufgehängt sind. Die Nachlauflenkachse 14 kann hierbei in Fahrtrichtung betrachtet hinter der starren bzw. ungelenkten Achse 13 angeordnet sein. In alternativer Ausbildung kann jedoch auch die vorauslaufende Achse als Nachlauflenkachse und die hinterherlaufende Achse als ungelenkte Achse ausgebildet werden.

Die Räder 15 der Nachlauflenkachse 14 können über eine Einzelradaufhängung individuell einlenkbar sein, d.h. jede der rechten und linken Radgruppen kann eigene Lenkachsen und eine eigene Nachlauflenkungsaufhängung aufweisen. Alternativ - und im Sinne einer vereinfachten Darstellung in Fig. 2 gezeigt - kann die Nachlauflenkachse 14 insgesamt einlenkbar und die beiden Räder 15 der Nachlauflenkachse um eine gemeinsame Nachlauflenkachse eingeschlagen werden.

Die freigängige Einlenkbarkeit kann in Weiterbildung der Erfindung durchaus gedämpft, also gegen einen Widerstand erfolgen, so dass freigängig nicht kraftlos meinen muss. Die freigängig einlenkbare Nachlauflenkachse 14 wird jedoch nicht zwangsgelenkt, wie dies beispielsweise bei zwangsgelenkten Fahrwerken, deren Räder mittels eines Hydraulikzylinders eingeschlagen werden, der Fall ist, sondern die Räder 15 der Nachlauflenkachse 14 können sich ihres Ausrichtung selbsttätig suchen.

Über eine Sperrvorrichtung 16 kann die freigängige Einlenkbarkeit der Räder 15 der Nachlauflenkachse 14 jedoch blockiert werden, wobei die Sperrvorrichtung 16 insbesondere derart ausgebildet sein kann, dass die Räder 15 in der uneingelenkten Geradeausstellung gesperrt werden und/oder bei Betätigen der Sperrvorrichtung 16 bei einer mehr oder weniger eingelenkten Stellung, die Räder 15 in die genannte Geradeausfahrstellung gezwungen werden.

Die Sperrvorrichtung 16 kann hierzu verschieden ausgebildet sein, beispielsweise eine mechanische Verriegelung umfassen und/oder einen Hydraulikaktor beispielsweise in Form eines Hydraulikzylinders aufweisen, der in der gelösten bzw. freigängigen Stellung in eine Schwimmstellung geschaltet und für die sperrende Stellung der Sperrvorrichtung 16 in eine vorbestimmte Stellung gezwungen und dort hydraulisch verriegelt werden kann.

Die Sperrvorrichtung 16 wird hierbei von einer Steuervorrichtung 17 angesteuert und betätigt, um die freigängige Einlenkbarkeit der Nachlauflenkachse 14 zu blockieren oder freizuschalten. Die genannte Steuervorrichtung 17 kann hierbei eine elektronische Rechnereinheit umfassen, die einen fremdenergiebetätigbaren Aktor der Sperrvorrichtung 21 ansteuern kann, beispielsweise einen Hydraulikaktor über Betätigung von Druckschaltventilen betätigt oder freischaltet oder blockiert. Die genannte Steuervorrichtung 17 kann hierbei in Form eines Jobrechners am Anbaugerät selbst oder auch am Schlepper 5 vorgesehen sein.

Die genannte Steuervorrichtung 17 berücksichtigt hierbei für das Bereitstellen eines automatischen Sperrsignals und/oder das automatische Bereitstellen eines Entsperrsignals ein Neigungssignal einer Bestimmungseinrichtung 18, mittels derer eine Neigung des Anbaugeräts 1 gegenüber der Horizontalen und/oder die Neigung einer zu befahrenden Fahrgasse gegenüber der Horizontalen bestimmen kann. Die genannte Bestimmungseinrichtung 18 ist hierbei insbesondere dazu ausgebildet, eine Querneigung quer zur Fahrtrichtung bzw. quer zur Längsachse des Anbaugeräts zu bestimmen. Wie eingangs näher erläutert, kann die genannte Bestimmungseinrichtung 18 grundsätzlich verschieden ausgebildet sein und insbesondere einen Neigungssensor 19 umfassen, der beispielsweise am Maschinenrahmen 3 angebracht und dessen Neigung gegenüber der Horizontalen messen kann.

Zeigt das Neigungssignal der Bestimmungseinrichtung 18 das Erreichen oder Überschreiten eines vorbestimmten Neigungsschwellwerts an, stellt die Steuervorrichtung 17 ein Sperrsignal bereit, durch das die Sperrvorrichtung 16 betätigt wird und die Einlenkbarkeit der Räder 15 der Nachlauflenkachse 14 blockiert. Zeigt das Neigungssignal der Bestimmungseinrichtung 18 hingegen an, dass der vorbestimmte Neigungsschwellwert oder ggf. auch ein kleinerer, zweiter Neigungsschwellwert unterschritten wird, gibt die Steuervorrichtung 17 ein Entsperrsignal ab, woraufhin die Sperrvorrichtung 16 die Einlenkbarkeit der Nachlauflenkachse 14 wieder freigibt.

Die Steuervorrichtung 17 kann ferner auch ein Fahrgeschwindigkeitssignal eines Fahrgeschwindigkeitssensors 20 und/oder ein Bodenbeschaffenheitssignal eines Bodenbeschaffenheitssensors 21 beispielsweise in Form eines Bodenfeuchte- oder Nässesensors berücksichtigen, um bei höheren Fahrgeschwindigkeiten und/oder glitschigeren Böden eine Sperrung der Einlenkbarkeit bereits bei geringeren Neigungen vorzusehen, wie dies eingangs bereits erläutert wurde.

## Patentansprüche

1. Landwirtschaftliches Anbaugerät zum Anbau an einen Schlepper (5), mit einem Maschinenrahmen (3), der über ein Fahrwerk (2) am Boden abgestützt ist, wobei das Fahrwerk (2) zumindest eine Achse (14) mit freigängig einschlagbaren Nachlaufrädern (15) aufweist, wobei eine Sperrvorrichtung (16) zum Sperren des Freigangs der Einlenkbarkeit der Nachlaufräder (15) vorgesehen ist, wobei eine Bestimmungseinrichtung (18) zum Bestimmen einer Neigung des Anbaugeräts und/oder einer Neigung der zu befahrenden Fahrgasse (22) vorgesehen ist, **dadurch gekennzeichnet, dass** eine Steuervorrichtung (17) zum automatischen Bereitstellen eines Sperrsignals zum Sperren der Sperrvorrichtung (16) bei Erreichen oder Überschreiten eines vorbestimmten Neigungsschwellwerts vorgesehen ist, wobei die Steuervorrichtung (17) dazu ausgebildet ist, zumindest einen weiteren Betriebs- und/oder Fahrgassenparameter zu berücksichtigen und den vorbestimmten Neigungsschwellwert, bei dessen Erreichen oder Überschreiten das Sperrsignal bereitgestellt wird, in Abhängigkeit des zumindest einen weiteren Betriebs- und/oder Fahrgassenparameters abzusenken oder zu erhöhen.

2. Landwirtschaftliches Anbaugerät nach dem vorhergehenden Anspruch, wobei die Steuervorrichtung (17) dazu ausgebildet ist, ein Entsperrsignal zum Entsperren der Sperrvorrichtung (16) bei Unterschreiten eines vorbestimmten Neigungsschwellwerts automatisch bereitzustellen.

3. Landwirtschaftliches Anbaugerät nach einem der vorhergehenden Ansprüche, wobei die Bestimmungseinrichtung (18) dazu ausgebildet ist, eine Querneigung quer zur Fahrgasse (22) und/oder quer zur Längsachse (23) des Anbaugeräts zu bestimmen, und die Steuervorrichtung das Sperrsignal bei Erreichen oder Überschreiten eines vorbestimmten Neigungsschwellwerts für die Querneigung bereitstellt.

4. Landwirtschaftliches Anbaugerät nach einem der vorhergehenden Ansprüche, wobei die Bestimmungseinrichtung (18) dazu ausgebildet ist, eine Neigung in Fahrtrichtung zu bestimmen und die Steuervorrichtung (17) dazu ausgebildet ist, das Sperrsignal bei Erreichen oder Überschreiten einer vorbestimmten Abschüssigkeit automatisch bereitzustellen.

5. Landwirtschaftliches Anbaugerät nach einem der vorhergehenden Ansprüche, wobei die Bestimmungseinrichtung (18) einen Neigungssensor (19) zum Erfassen der Anbaugeräte- und/oder Fahrgassenneigung aufweist.

6. Landwirtschaftliches Anbaugerät nach einem der vorhergehenden Ansprüche, wobei die Bestimmungseinrichtung (18) dazu ausgebildet ist, die Fahrgassenneigung eines vorausliegenden Fahrgassenstücks (22), das erst noch erreicht wird, zu bestimmen und die Steuervorrichtung (17) dazu ausgebildet ist, das Sperrsignal automatisch bereitzustellen, wenn die Neigung des vorausliegenden Fahrgassenstücks des vorbestimmten Neigungsschwellwert erreicht oder überschreitet.

7. Landwirtschaftliches Anbaugerät nach einem der vorhergehenden Ansprüche, wobei die Steuervorrichtung dazu ausgebildet ist, ein Fahrgeschwindigkeitssignal zu berücksichtigen und den vorbestimmten Neigungsschwellwert mit zunehmender Fahrgeschwindigkeit abzusenken.

8. Landwirtschaftliches Anbaugerät nach einem der vorhergehenden Ansprüche, wobei die Steuervorrichtung (17) dazu ausgebildet ist, ein Bodenbeschaffenheitssignal eines Bodenbeschaffenheitssensors, insbesondere eines Bodenfeuchte- und/oder Nässesensors, zu berücksichtigen und den vorbestimmten Neigungsschwellwert für traktionsärmere Bodenbeschaffenheiten abzusenken und/oder für traktionsstärkere Bodenbeschaffenheiten zu erhöhen.

9. Landwirtschaftliches Anbaugerät nach einem der vorhergehenden Ansprüche, wobei das Fahrwerk (2) mehrere Achsen (13, 14) aufweist, von denen eine die genannte Nachlauflenkachse (14) und eine weitere eine nicht einlenkbare oder aktiv gelenkte Achse (13) bildet.

10. Landwirtschaftliches Anbaugerät nach einem der vorhergehenden Ansprüche, wobei eine Anbauvorrichtung zum Anbau an einen Schlepper (5) vorgesehen und dazu ausgebildet ist, ein Einlenken des Anbaugeräts gegenüber dem Schlepper (5) um eine aufrechte Achse zuzulassen, wobei die Anbauvorrichtung insbesondere eine Deichsel (4) umfasst.

## Claims

1. Agricultural attachment for attaching to a tractor (5), comprising a machine frame (3) which is supported on the ground by means of a chassis (2), wherein the chassis (2) comprises at least one axle (14) comprising trailing wheels (15) that are steerable in a freely running manner, wherein a locking device (16) is provided for locking the free-running nature of the steerability of the trailing wheels (15), wherein a determination means (18) is provided for determining an inclination of the attachment and/or an inclination of the travel aisle (22) to be travelled, **characterised in that** a controller (17) is provided for automatically providing a locking signal for locking the locking device (16) if a predetermined inclination threshold is reached or exceeded, wherein the controller (17) is designed to take into account at least one further operating and/or travel aisle parameter, and to lower or raise the predetermined inclination threshold, upon reaching or exceeding which the locking signal is provided, depending on the at least one further operating and/or travel aisle parameter.

2. Agricultural attachment according to the preceding claim, wherein the controller (17) is designed to automatically provide an unlocking signal for unlocking the locking device (16) if a predetermined inclination threshold is not reached.

3. Agricultural attachment according to either of the preceding claims, wherein the determination means (18) is designed for determining a transverse inclination transversely to the travel aisle (22) and/or transversely to the longitudinal axis (23) of the attachment, and the controller provides the locking signal upon a predetermined inclination threshold for the transverse inclination being reached or exceeded.

4. Agricultural attachment according to any of the preceding claims, wherein the determination means (18) is designed to determine an inclination in the direction of travel, and the controller (17) is designed to automatically provide the locking signal upon a predetermined steepness being reached or exceeded.

5. Agricultural attachment according to any of the preceding claims, wherein the determination means (18) comprises an inclination sensor (19) for recording the attachment and/or travel aisle inclination.

6. Agricultural attachment according to any of the preceding claims, wherein the determination means (18) is designed to determine the travel aisle inclination of a travel aisle portion (22) lying ahead which is only just being reached, and the controller (17) is designed to provide the locking signal automatically if the inclination of the travel aisle portion lying ahead reaches or exceeds the predetermined inclination threshold.

7. Agricultural attachment according to any of the preceding claims, wherein the controller is designed to take account of a travel speed signal and to lower the predetermined inclination threshold as the travel speed increases.

8. Agricultural attachment according to any of the preceding claims, wherein the controller (17) is designed to take account of a soil condition signal of a soil condition sensor, in particular a soil moisture and/or dampness sensor, and to lower the predetermined inclination threshold for lower-traction soil conditions and/or to increase said threshold for higher-traction soil conditions.

9. Agricultural attachment according to any of the preceding claims, wherein the chassis (2) comprises a plurality of axles (13, 14), one of which forms said trailing steering axle (14) and a further of which forms a non-steerable or actively steered axle (13).

10. Agricultural attachment according to any of the preceding claims, wherein an attachment for attaching to a tractor (5) is provided and is designed for allowing for steering of the attachment, relative to the tractor (5), about an upright axis, wherein the attachment in particular comprises a drawbar (4).

## Revendications

1. Appareil rapporté agricole destiné à être installé au niveau d'un tracteur (5), avec un bâti de machine (3), qui est soutenu par l'intermédiaire d'un train de roulement (2) au niveau du sol, dans lequel le train de roulement (2) présente au moins un essieu (14) avec des roues à pivot (15) pouvant être rabattues librement, dans lequel un dispositif de blocage (16) est prévu pour bloquer la liberté du guidage des roues à pivot (15), dans lequel un système de définition (18) est prévu pour définir une inclinaison de l'appareil rapporté et/ou une inclinaison de l'allée de circulation (22) à emprunter, **caractérisé en ce qu'**un dispositif de commande (17) est prévu pour fournir automatiquement un signal de blocage servant à bloquer le dispositif de blocage (16) en cas d'atteinte ou de dépassement d'une valeur de seuil d'inclinaison prédéfinie , dans lequel le dispositif de commande (17) est réalisé pour tenir compte au moins d'un autre paramètre de fonctionnement et/ou d'allée de circulation et pour abaisser ou augmenter la valeur de seuil d'inclinaison prédéfinie, lors de l'atteinte ou du dépassement de laquelle le signal de blocage est fourni, en fonction de l'au moins un autre paramètre de fonctionnement et/ou d'allée de circulation.

2. Appareil rapporté agricole selon la revendication précédente, dans lequel le dispositif de commande (17) est réalisé pour fournir automatiquement un signal de déblocage servant à débloquer le dispositif de blocage (16) en cas de valeur restant inférieure à une valeur de seuil d'inclinaison prédéfinie.

3. Appareil rapporté agricole selon l'une quelconque des revendications précédentes, dans lequel le système de définition (18) est réalisé pour définir une inclinaison transversale de manière transversale par rapport à l'allée de circulation (22) et/ou de manière transversale par rapport à l'essieu longitudinal (23) de l'appareil rapporté, et le dispositif de commande fournit le signal de blocage lors de l'atteinte ou du dépassement d'une valeur de seuil d'inclinaison prédéfinie pour l'inclinaison transversale.

4. Appareil rapporté agricole selon l'une quelconque des revendications précédentes, dans lequel le système de définition (18) est réalisé pour définir une inclinaison dans la direction de déplacement et le dispositif de commande (17) est réalisé pour fournir automatiquement le signal de blocage en cas d'atteinte ou de dépassement d'une déclivité prédéfinie.

5. Appareil rapporté agricole selon l'une quelconque des revendications précédentes, dans lequel le système de définition (18) présente un capteur d'inclinaison (19) servant à détecter l'inclinaison d'appareils rapportés et/ou d'allées de circulation.

6. Appareil rapporté agricole selon l'une quelconque des revendications précédentes, dans lequel le système de définition (18) est réalisé pour définir l'inclinaison d'allée de circulation d'un tronçon d'allée de circulation (22) précédent, qui n'a pas encore été atteint et le dispositif de commande (17) est réalisé pour fournir automatiquement le signal de blocage quand l'inclinaison du tronçon d'allée de circulation précédent atteint ou dépasse la valeur de seuil d'inclinaison prédéfinie.

7. Appareil rapporté agricole selon l'une quelconque des revendications précédentes, dans lequel le dispositif de commande est réalisé pour tenir compte d'un signal de vitesse de déplacement et pour abaisser la valeur de seuil d'inclinaison au fur et à mesure que la vitesse de déplacement augmente.

8. Appareil rapporté agricole selon l'une quelconque des revendications précédentes, dans lequel le dispositif de commande (17) est réalisé pour tenir compte d'un signal de nature du sol d'un capteur de nature de sol, en particulier d'un capteur d'humidité de sol et/ou un capteur d'humidité et pour abaisser la valeur de seuil d'inclinaison prédéfinie pour des natures de sol plus à traction plus faible et/ou pour l'augmenter pour des natures de sol à traction plus forte.

9. Appareil rapporté agricole selon l'une quelconque des revendications précédentes, dans lequel le train de roulement (2) présente plusieurs essieux (13, 14), dont un forme ledit essieu directeur à pivot (14) et un autre essieu (13) non braquable ou activement dirigé.

10. Appareil rapporté agricole selon l'une quelconque des revendications précédentes, dans lequel un dispositif rapporté est prévu pour être installé au niveau d'un tracteur (5) et est réalisé pour autoriser un braquage de l'appareil rapporté par rapport au tracteur (5) autour d'un essieu vertical, dans lequel le dispositif rapporté comprend en particulier un timon (4).
